# EUROPÄISCHE PATENTANMELDUNG

(11) **EP 1 262 453 A2**
(43) Veröffentlichungstag der Anmeldung: **04.12.2002**
(21) Anmeldenummer: 02010247.1
(22) Anmeldetag: 17.05.2002
(51) Int. Cl.: C01B 25/00

(54) **Mikroverkapselung von rotem Phosphor**

(30) Priorität: 01.06.2001 DE 10126759
(71) Anmelder: BAYER AG, 51368 Leverkusen (DE)
(72) Erfinder: Peerlings, Henricus, Dr., 42699 Solingen (DE); Wagner, Michael, Dr., 47443 Moers (DE); Podszun, Wolfgang, Dr., 51061 Köln (DE)

(57) **Zusammenfassung**

Die Erfindung betrifft ein Verfahren zur Mikroverkapselung von rotem Phosphor mit Harnstoff-Resorcin-Formaldehydharz.

## Beschreibung

Die Erfindung betrifft ein Verfahren zur Mikroverkapselung von rotem Phosphor mit Harnstoff-Resorcin-Formaldehydharz.

Roter Phosphor ist als äußerst wirksames Flammschutzmittel speziell für glasfaserverstärkte Polyamide und eine Reihe weiterer Kunststoffe seit langer Zeit bekannt.

So wird die Verwendung von rotem Phosphor in verstärkten Polyamidformmassen beispielsweise in der DE-A 1 931 387 beschrieben.

Der Umgang mit rotem Phosphor, speziell dessen Einarbeitung in Kunststoff-Formmassen bei erhöhten Temperaturen, ist jedoch mit erheblichen Risiken verbunden. So bildet roter Phosphor unter Einwirkung von Luftsauerstoff und Feuchtigkeit, insbesondere bei den für die Verarbeitung technischer Kunststoffe typischen Temperaturen bis über 300°C, stark toxische Phosphine. Letztere sind neben ihrer Giftigkeit auch aufgrund ihres Selbstentzündungspotentials äußerst kritisch. Zudem besteht die Gefahr der Selbstentzündung von rotem Phosphor an sich.

In der Vergangenheit hat es daher eine Vielzahl an Bestrebungen gegeben, die Handhabbarkeit von rotem Phosphor bei der Einarbeitung in Kunststoff-Formmassen zu verbessern bzw. sicherer zu gestalten.

So wurde beispielsweise versucht, die Phosphinbildung durch die Beimengung von Metallsalzen zu rotem Phosphor zu unterdrücken. Hierbei kann es sich um Metalloxide und -hydroxide in Kombination mit weiteren Metallverbindungen oder Hilfsstoffen handeln. Dies ist u.a. in den DE-A 2 308 104, EP-A 278 555 und EP-A 557 222 beschrieben.

Ferner sind Arbeiten veröffentlicht worden, die die Stabilisierung von rotem Phosphor durch Aufbringen einer Umhüllung beschreiben. So ist roter Phosphor, der durch Ausfällen von Siliciumdioxid oder durch Aufbringen von Melamin-Formaldehydharz verkapselt wird, aus der DE-A 2 646 835, DE-A 19 619 701 und EP-A 052 217 bekannt. Eine Beschichtung mit Phenol-Formaldehydharz offenbart die DE-A 2 625 673.

In der WO 87/00187 ist die Kombination von Harnstoff-Resorcin und Formaldehyd für die Mikroverkapselung von rotem Phosphor beschrieben. Das Verfahren beinhaltet hierbei die Zugabe der Verkapselungskomponenten zu einer wässrigen Suspension von rotem Phosphor, wobei die Kondensation der Reaktanden durch ein Absenken des pH-Wertes erreicht wird. Nachteil der beschriebenen Variante ist die noch hohe Phophinfreisetzungsrate des mikroverkapselten roten Phosphors sowie zusätzlich eine geringe Raum-Zeit-Ausbeute (wobei man unter Raum-Zeit-Ausbeute im vorliegenden Zusammenhang den pro Zeiteinheit umgesetzten Feststoffanteil an zu verkapselndem rotem Phosphor in der eingesetzten wässrigen Reaktionsgesamtmischung versteht, welcher u.a. durch das Masseverhältnis von in die Umsetzung eingebrachtem rotem Phosphor zum Gesamtwasseranteil beschrieben werden kann) der Reaktion bezogen auf roten Phosphor. Weiterer Nachteil der Reaktion in verdünnter Lösung/Suspension ist, dass zum Starten der Kondensationsreaktion relativ viel an Säure zugegeben werden muss, welche bei der Aufarbeitung der Produktionsabwässer dann mit entsprechend großen Mengen an Lauge wieder neutral zu stellen ist.

Aufgabe der vorliegenden Erfindung ist es, ein alternatives Verfahren zur Mikroverkapselung von rotem Phosphor mit Harnstoff-Resorcin-Formaldehydharz zu finden, welches zum einen zu einer Verbesserung der Eigenschaften des mikroverkapselten roten Phosphors mit Bezug auf dessen Phosphinfreisetzungsrate führt und zum anderen eine deutlich verbesserte Raum-Zeit-Ausbeute realisiert.

Es wurde gefunden, dass die gestellte Aufgabe zur Mikroverkapselung von rotem Phosphor mit Harnstoff-Resorcin-Formaldehydharz durch ein Verfahren gelöst werden kann, welches Gegenstand der vorliegenden Erfindung ist, wobei
- ein Gemisch aus: 0,4 bis 4 Gew.-% Harnstoff,
2 bis 20 Gew.-% Resorcin und
5 bis 150 Gew.-% Formaldehyd,

jeweils bezogen auf die Masse an eingesetztem roten Phosphor, in wässriger Phase in Anwesenheit von feinverteiltem, d.h. von nach mit bekannten Methoden (Ullmann's Encyclopedia of Industrial Chemistry, VCH 1988, Vol B2, S. 25-1 bis 25-33 und hier zitierte Literatur; Ullmann's Encyclopedia of Industrial Chemistry, VCH Publishers, Inc. 1992, Vol B4, S. 87-120 und S. 167-180 sowie jeweils hierin zitierte Literatur) der Mischtechnik suspendiertem roten Phosphor und 0,1 bis 8 Gew.-% Hexamethylentetramin, bezogen auf die Masse an eingesetztem roten Phosphor, durch Zusatz einer Menge an Säure, die in der Mischung zur Einstellung des pH-Wertes auf 0 - 5 führt, zur Polymerisation gebracht wird, wobei die Temperatur der Reaktionsmischung bevorzugt 0,5 bis 24 h bei 25 bis 150°C gehalten wird und erfindungsgemäß ein Gewichtsverhältnis von rotem Phosphor zu Wasser von 1 : 0,3 bis 1 : 3 eingestellt ist. Mit Wasser ist hierbei die gesamte wässrige Phase einschließlich des Wasseranteils einer etwaig verwendeten Formaldehydlösung gemeint. Bei den Prozentangaben mit Bezug auf die eingesetzten Substanzen handelt es sich wie im Folgenden auch um Masseprozente.

Unter Formaldehyd versteht man im vorliegenden Zusammenhang sowohl reinen Formaldehyd als auch Lösungen von Formaldehyd in Wasser, welche noch mit 10 bis 15 Gew.-% eines Stabilisators wie Methanol versetzt sein können. Im Rahmen der vorliegenden Erfindung hat sich die Verwendung von wässrigen Formaldehydlösungen bewährt, wobei 37 gew.-%ige wässrige Formaldehydlösung, stabilisiert mit 10 bis 15 % Methanol, besonders bevorzugt ist.

Unter rotem Phosphor sind im vorliegenden Zusammenhang alle farbigen allotropen Formen des Phosphors in feinverteilter Form zu verstehen. Die Partikel haben dabei üblicherweise eine mittlere Teilchengröße von 0,1 bis 100, vorzugsweise 0,2 bis 50, besonders bevorzugt 10 bis 50 µm. Die Teilchengröße des Phosphors kann durch Mahlung, insbesondere durch Nassmahlung mit Kugelmühlen oder Perlmühlen, eingestellt werden. Als Mahlmedium sind sowohl Wasser als auch organische Lösungsmittel wie z.B. Toluol, Mineralöl, Dimethylformamid, Dimethyacetamid und Ameisensäure geeignet.

Die Reaktion kann bei Drücken von 0,8 bis 12 bar durchgeführt werden.

Es wurde gefunden, dass innerhalb der erfindungsgemäßen Verfahrensbedingungen bevorzugt Gemische aus 0,5 bis 3,0 % Harnstoff, 5 bis 15 % Resorcin, 10 bis 100 % Formaldehyd sowie 1 bis 6 % Hexamethylentetramin bezogen auf den eingesetzten roten Phosphor in glatten Umsetzungen zu sehr dichten und dem beschriebenen Stand der Technik überlegenen Mikrokapseln führen. Besonders bevorzugt sind in diesem Zusammenhang Gemische bestehend aus 1 bis 2,5 % Harnstoff, 7 bis 12 % Resorcin, 25 bis 90 % Formaldehyd sowie 2 bis 6 % Hexamethylentetramin, jeweils bezogen auf den eingesetzten roten Phosphor.

Der nach dem erfindungsgemäßen Verfahren mikroverkapselte rote Phosphor besteht aus Partikeln, die im Wesentlichen eine Kernhüllenstruktur aufweisen.

Es wurde im Rahmen der vorliegenden Erfindung ebenfalls gefunden, dass besonders gute Ergebnisse mit Bezug auf die gestellte Aufgabe erzielt werden können, wenn Reaktionstemperaturen von 50 bis 150°C, besonders bevorzugt von 70 bis 150°C eingestellt werden.

Neben den beschriebenen Bedingungen haben sich Reaktionszeiten von 0,5 bis 12 h, speziell von 1,5 bis 5 h besonders bewährt.

Mit Blick auf die Raum Zeit-Ausbeute, welche auch durch das Masse-Verhältnis von in die Reaktion eingebrachtem rotem Phosphor zu in der Mischung enthaltenem Wasser, einschließlich des Masseanteils einer eingesetzten Formaldehydlösung, ausgedrückt werden kann, wurde gefunden, dass sich im Rahmen des erfindungsgemäßen Verfahrens Phosphor: Wasser Verhältnisse mit Quotienten deutlich >1 zugunsten des Anteils von rotem Phosphor einstellen lassen.

Überraschenderweise wurde gefunden, dass es durch die formale Erhöhung des Feststoffanteils der Reaktionsmischung nicht zu einer Verklumpung des roten Phosphors in Form nur unvollständig verkapselter agglomerierter Partikel kommt. Vielmehr lässt sich durch die erfindungsgemäße Reduzierung des Masseanteils an Wasser im Verhältnis zum roten Phosphor die spätere Phosphinfreisetzung aus dem nach dem erfindungsgemäßen Verfahren erhaltenen mikroverkapselten roten Phosphor deutlich herabsetzen. Erfindungsgemäß lassen sich in diesem Zusammenhang die besten Ergebnisse erreichen, wenn ein Verhältnis von rotem Phosphor zu Wasser von 1 : 0,3 bis 1 : 2,5 vorliegt, besonders bevorzugt von 1 : 0,35 bis 1 : 1,5.

Ferner wurde gefunden, dass durch die Erhöhung des Druckes im Reaktionsbehältnis die Qualität des nach dem erfindungsgemäßen Verfahren erhaltenen mikroverkapselten roten Phosphors zusätzlich verbessert werden kann. Hierbei wird bevorzugt in einem Druckbereich von 0,8 bis 8 bar, besonders bevorzugt von 0,8 bis 5 bar gearbeitet.

Die apparative Durchführung der Mikroverkapselung ist in den verschiedensten Reaktoren möglich. Hierzu zählen u.a. Apparaturen aus Glas, wahlweise ausgestattet mit einem Rückflusskühlsystem, Autoklaven verschiedenster Ausführungsform und Größe, insbesondere Behältnisse aus Stahlemaille, ausgestattet mit dem Fachmann bekannten Rührwerken, Heizvorrichtungen sowie Beschickungs-, Ablass- und Pumpvorrichtungen. Zudem können die verwendeten Reaktionsgefäße über entsprechende Vorrichtungen für deren Inertisierung mit geeigneten Schutzgasen wie beispielsweise Argon, CO₂ oder Stickstoff verfügen.

Die Herstellung des erfindungsgemäßen mikroverkapselten roten Phosphors erfolgt in der Weise, dass partikelförmiger roter Phosphor üblicherweise mit einer mittleren Teilchengröße von 0,1 bis 100 µm in einer wässrigen Phase, die Harnstoff, Resorcin, Formaldehyd und obengenannte Mengen Hexamethylentetramin enthält, bei einem pH-Wert von 6 bis 13, mit üblichen Techniken (Ullmann's Encyclopedia of Industrial Chemistry, VCH 1988, Vol B2, S. 25-1 bis 25-33 und hier zitierte Literatur; Ullmann's Encyclopedia of industrial Chemistry, VCH Publishers, Inc. 1992, Vol B4, S. 87-120 und S. 167-180 sowie jeweils hierin zitierte Literatur) suspendiert wird und dann durch Zusatz einer starken Säure der pH-Wert auf 0 bis 5 abgesenkt wird.

Es wurde gefunden, dass die Reaktion der Harzbildung nach der erfindungsgemäßen Zusammensetzung besonders effektiv bei einem pH-Wert von 0 bis 3 gestartet werden kann, wobei sich die besten Ergebnisse bei pH-Werten zwischen 0 bis 1,5 erzielen lassen.

Bei der verwendeten Säure handelt es sich bevorzugt um eine Mineralsäure, besonders bevorzugt sind Phosphorsäure, Salzsäure, Schwefelsäure, Salpetersäure, ganz besonders bevorzugt ist Schwefelsäure. Im Rahmen der vorliegenden Erfindung wurde gefunden, dass es von besonderem Vorteil ist, Schwefelsäure einzusetzen. Im Gegensatz zu Phosphorsäure bringt der Einsatz von Schwefelsäure keine Probleme bei der Abwasserentsorgung über biologische Klärsysteme mit sich, für die Phosphate und deren Derivate in größeren Mengen prohibitiv sind.

Nach der Säurezugabe wird das Reaktionsgemisch bei den bereits oben beschriebenen Reaktionsbedingungen temperiert. Die Reaktion kann in einer Inertgasatmosphäre durchgeführt werden, wobei Stickstoff und CO₂ bevorzugt sind, besonders bevorzugt Stickstoff.

Die Isolierung des mikroverkapselten roten Phosphors aus der Suspension kann in einfacher Weise durch Sedimentieren, Filtrieren und/oder Zentrifugieren erfolgen. Zu diesem Zwecke kann das verkapselte Material einschließlich Mutterlauge beispielsweise direkt auf eine Fritte gegeben und bei Bedarf unter Anlegen eines geeigneten Vakuums abgetrennt werden. Ferner ist es auch möglich, das gesamte Material direkt aus dem Reaktor in eine Zentrifuge zu überführen, was bei Bedarf mit Hilfe eines Pumpsystems realisiert werden kann. Die Zentrifuge kann in diesem Zusammenhang inertisierbar sein und bei Bedarf quasikontinuierlich betrieben werden.

Zur weiteren Reinigung können Waschschritte beispielsweise mit Wasser oder Alkohol angewendet werden.

Die Trocknung des isolierten mikroverkapselten roten Phosphors kann auf bekannte Weise, beispielsweise mit Hilfe von Vakuumtrockenschränken, Umlufttrockenschränken, Taumel- oder Schaufeltrocknern, erfolgen.

Der nach dem erfindungsgemäßen Verfahren mikroverkapselte rote Phosphor eignet sich hervorragend zur Flammfestausrüstung von Kunststoffen bzw. von Blends aus zwei oder mehreren verschiedenen Kunststoffen. Hierzu gehören thermoplastische Kunststoffe wie Homo- und Copolymere von olefinisch ungesättigten Monomeren wie Polyfluorethylene, Polyethylen, Polypropylen, Ethylen/Propylen-Copolymere, Polystyrole, Styrol/Acrylnitril-Copolymere, ABS-Copolymere (Acrylnitril/Butadien/Styrol), Vinyl-Chlorid Homo- und Copolymere, Polyacrylate, insbesondere Polymethylmethacrylat, Vinylacetat-Copolymere, Polyacetale, Polycarbonate, insbesondere Polycarbonate auf der Basis von Bisphenol A und -derivaten, Polyester, Polyamide, d.h. bekannte Homopolyamide, Copolyamide und Mischungen dieser Polyamide. Polyamide und Polyester sind bevorzugt, Polyamide sind besonders bevorzugt.

Die Kunststoffe können verstärkende Füllstoffe, beispielsweise Glasfasern enthalten oder solche Füllstoffe, die den Formkörpern bestimmte Merkmale verleihen, beispielsweise als Gleitmittel wirkende Füllstoffe oder inerte Füllstoffe wie Kaolin oder Talk. Weiterhin können die Kunststoffe zahlreiche Zusätze wie Antioxidantien, Hitze- oder Lichtstabilisatoren, Farbstoffe, Pigmente oder andere Funktionsadditive enthalten. Insbesondere vorzugsweise Zusätze in Form von organischen und anorganischen Metallverbindungen. Hierzu zählen bevorzugt Oxide und Sulfide des Zink, die Oxide und Hydroxide des Magnesiums, Kupferoxid, Eisenoxide, Metallcarbonate wie Calcium- oder Magnesiumcarbonat, Talcite bzw. Hydrotalcite (Metallcarbonathydrate), Borate, insbesondere Zinkborat, sowie allgemein stöchiometrische Mischungen von Metallverbindungen/oxiden. Weiterhin zählen hierzu Lanthanide und deren Salze, bevorzugt Cer und dies enthaltenen Substanzen, Salze wie Ce(IV)oxid, CeO₂.

Der zusätzliche Einsatz von kautschukelastischen Polymerisaten (oft auch als Schlagzähmodifikator, Elastomer oder Kautschuk bezeichnet) kann sich in manchen Fällen bezüglich des mechanischen Eigenschaftsprofils als vorteilhaft erweisen.

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall "Toughened Plastics" (Applied Science Publishers, London, 1977) beschrieben.

Bevorzugt sind solche kautschukelastischen Polymere, wie sie in WO-A 00/46419 beschrieben werden.

Gegenstand der Erfindung sind nach dem erfindungsgemäßen Verfahren hergestellter mikroverkapselter roter Phosphor, wobei mikroverkapselter roter Phosphor, der einen Gewichtsanteil der Kapselwand von 1 bis 50 Gew.-%, vorzugsweise 5 bis 25 Gew.-% bezogen auf die Gewichtssumme von Phosphor und Kapselwand aufweist, bevorzugt ist, sowie das Herstellverfahren selbst.

Weiterer Gegenstand ist die Verwendung von erfindungsgemäßem mikroverkapseltem rotem Phosphor als Flammschutzmittel in Kunststoffen und Kunststoffblends, wobei technische Thermoplaste, insbesondere Polyamide und Polyester, bevorzugt sind.

Gegenstand der Erfindung sind weiterhin Formmassen enthaltend einen nach dem erfindungsgemäßen Verfahren mikroverkapselten roten Phosphor. Weiterer Gegenstand sind erfindungsgemäße Formmassen, zusätzlich enthaltend einen oder mehrere Füllstoffe wie Glasfasern und/oder Talkum, wobei Glasfasern besonders bevorzugt sind. Weiterer Gegenstand sind erfindungsgemäße Formmassen, zusätzlich enthaltend eine oder mehrere anorganische oder organische Metallverbindung, Metallsalz und/oder Metallkomplex. Weiterhin können zusätzlich Schlagzähmodifikatoren enthalten sein.

Optional können die erfindungsgemäßen Formmassen auch zusätzlich ein weiteres/weitere Flammschutzmittel enthalten.

Hier sind bevorzugt erfindungsgemäße Formmassen, dadurch gekennzeichnet, dass es sich bei dem zusätzlichen Flammschutzmittel um eine Melaminverbindung, bevorzugt Melamin, besonders bevorzugt Melamincyanurat und/oder eine Organophosphorverbindung und/oder eine weitere halogenfreie Verbindung handelt.

Weiterer Gegenstand der Erfindung sind Formmassen, wobei es sich bei den Metallverbindungen um Substanzen aus den Gruppen der Metalloxide, Metallcarbonate, Metallhydroxide, Metallsulfide, Metallcarbonathydrate, bevorzugt aus der Gruppe der Zink- und Magnesiumsalze wobei Zinkoxid, Zinkfluorid, Zinksulfid, Zinkborat, Magnesiumoxid sowie Magnesiumhydroxid sowie deren Mischungen besonders bevorzugt sind, handelt. Weiterhin zählen hierzu Lanthanide und deren Salze, bevorzugt Cer und diese enthaltende Substanzen/Salze wie Ce(IV)oxid, CeO₂. Die genannten Mineralien können auch mit bekannten Mitteln beschichtet bzw. oberflächenbehandelt sein.

Weiterer Gegenstand der Erfindung sind Formkörper, hergestellt aus den erfindungsgemäßen Formmassen.

Die vorliegende Erfindung soll anhand der folgenden Beispiele näher erläutert werden.

### Beispiele

### Beispiel 1

Ein mit Rückflusskühler und KPG-Rührer versehenes Reaktionsgefäß aus Glas wird mit 30,6 g Harnstoff, 151,8 g Resorcin, 1125,0 ml 37 %iger Formaldehydlösung, stabilisiert mit 10 % Methanol, sowie 59,1 g Hexamethylentetramin zusammen mit 2250 ml Wasser beschickt. Anschließend fügt man 1500 g roten Phosphor hinzu und rührt die Mischung auf. Unter weiterem kräftigen Rühren wird sodann soviel konzentrierte Schwefelsäure zugegeben, bis ein pH-Wert von 1,5 erreicht ist, und die Mischung wird für 2 h bei 100°C erwärmt. Man lässt auf Raumtemperatur abkühlen und isoliert den mikroverkapselten roten Phosphor dann mit Hilfe einer Fritte. Der Filterkuchen wird mit Wasser solange nachgewaschen, bis das aufgefangene Waschwasser einen pH-Wert von mindestens 5 aufweist und dann bei 70°C im Vakuumtrockenschrank oder wahlweise im Umlufttrockenschrank getrocknet.

### Beispiel 2

Zu einer Lösung von 19,7 g Hexamethylentetramin, 50,7 g Resorcin, 10,2 g Harnstoff, 375 ml 37 %iger Formaldehydlösung, stabilisiert mit 10 % Methanol, und 375 ml Wasser werden 500 g roter Phosphor in eine Apparatur nach Beispiel 1 gegeben. Nachdem die Mischung mit Hilfe des Rührers gut suspendiert worden ist, fügt man konzentrierte Schwefelsäure bis zum Erreichen eines pH-Wertes von 1,5 zu. Die Reaktionsmischung wird 2 h unter Rückfluss gerührt, nach Abkühlen auf Raumtemperatur über eine Fritte filtriert und mit Wasser solange nachgewaschen, bis das aufgefangene Waschwasser einen pH-Wert von mindestens 5 aufweist. Nach vollständiger Isolierung des Filterkuchens wird dieser bei 70°C im Vakuumtrockenschrank oder wahlweise im Umlufttrockenschrank getrocknet.

### Beispiel 3

Zu einer Lösung von 19,7 g Hexamethylentetramin, 50,7 g Resorcin, 10,2 g Harnstoff, und 375 ml 37 %iger Formaldehydlösung, stabilisiert mit 10 % Methanol, werden 500 g roter Phosphor in eine Apparatur nach Beispiel 1 gegeben. Nachdem die Mischung mit Hilfe des Rührers gut suspendiert worden ist, stellt man mit konzentrierter Schwefelsäure einen pH-Wert von 1,5 ein. Die Reaktionsmischung wird 2 h unter Rückfluss gerührt, nach Abkühlen auf Raumtemperatur über eine Fritte filtriert und mit Wasser solange nachgewaschen, bis das aufgefangene Waschwasser einen pH-Wert von mindestens 5 aufweist. Nach vollständiger Isolierung des Filterkuchens wird dieser bei 70°C im Vakuumtrockenschrank oder wahlweise im Umlufttrockenschrank getrocknet.

### Beispiel 4

In einem 350 ml VA-Autoklav mit Rührer und Inertgasversorgung werden 2,04 g Harnstoff, 10,14 g Resorcin, 75 ml 37 %ige Formaldehydlösung stabilisiert mit 10 % Methanol, 3,8 g Hexamethylentetramin sowie 75 ml E-Wasser vorgelegt. Nach dem Eintrag von 100 g rotem Phosphor gibt man 4 ml konz. Schwefelsäure zu, beaufschlagt den Reaktor mit 2,4 bar Stickstoff und rührt die Mischung bei einer Temperatur von 100°C und einem Druck von 4,4 bar für 2 h. Im Anschluss wird die gesamte Mischung in ein Standbehältnis abgelassen und der mikroverkapselte rote Phosphor dekantierend mit Wasser gewaschen, bis das gebrauchte Waschwasser einen pH-Wert von mindestens 5 aufweist. Das Produkt trocknet man abschließend bei 70°C im Vakuumtrockenschrank.

### Vergleichsbeispiel 5

Mikroverkapselung nach WO 87/00187, dort Beispiel 4: Zu einer Lösung von 20 g Harnstoff, 50 g Resorcin, 400 ml Formaldehydlösung, stabilisiert mit 10 % Methanol, und 3000 ml Wasser werden 1000 g roter Phosphor in eine Apparatur nach Beispiel 1 gegeben. Nachdem die Mischung mit Hilfe eines Rührers gut suspendiert worden ist, fügt man bis zum Erreichen eines pH-Wertes von 1,5 konzentrierte Schwefelsäure hinzu. Es wird 2 h unter Rückfluss gerührt. Die Reaktionsmischung wird über eine Fritte filtriert und mit Wasser so lange nachgewaschen, bis das aufgefangene Wasser einen pH-Wert von mindestens 5 aufweist. Nach vollständiger Isolierung des Filterkuchens wird dieser bei 70°C im Vakuumtrockenschrank oder wahlweise im Umlufttrockenschrank getrocknet.

In der folgenden Tabelle sind ausgewählte Versuchsparameter der vorangegangenen Beispiele gemeinsam mit den an den isolierten mikroverkapselten Pᵣₒₜ Produkten bestimmten Phosphinwerten zusammengefasst:

| **Beispiel** | **Ausbeute Masseverhältnis P**_{**rot**} **: Wasser*** | **Phosphinfreisetzung**** | **Druck** |
|---|---|---|---|
| 1 | 1 :1 ,9 | 18 ppm | normal*** |
| 2 | 1 : 1,1 | 8 ppm | normal |
| 3 | 1 : 0,4 | 8 ppm | normal |
| 4 | 1 : 1,1 | < 5 ppm | 4,4 bar |
| 5 (Vergleich) | 1 : 3,2 | 80 ppm | normal |

| | | | |
|---|---|---|---|
| * zur Verdünnung zugegebenes Wasser einschließlich Wasseranteil Formaldehydlösung | | | |
| ** bei thermischer Beanspruchung von mikroverkapseltem roten Phosphor nach 10 min bei 280°C, bezogen auf 100 mg unverkapselten roten Phosphor | | | |
| *** Normaldruck = | | | |

Unter Normaldruck wird in diesem Zusammenhang der während der Versuchsdurchführung bei Raumtemperatur herrschende Luftdruck in seiner natürlichen Schwankungsbreite verstanden.

Beispiele 1, 2 und 3 machen deutlich, dass durch die erfindungsgemäße Mischung die Phosphinfreisetzungsrate aus dem mikroverkapselten Phosphorprodukt signifikant herabgesetzt werden kann. Eine weitere Verbesserung der Produktqualität lässt sich zudem durch eine Reaktionsführung unter Druck erzielen (s. Beispiel 4).

## Patentansprüche

1. Verfahren zur Mikroverkapselung von rotem Phosphor mit Harnstoff-Resorcin-Formaldehydharz, wobei ein Gemisch aus
a) 0,4 bis 4 Gew.-% Harnstoff
b) 2 bis 20 Gew.-% Resorcin
c) 5 bis 150 Gew.-% Formaldehyd
jeweils bezogen auf die Masse an eingesetztem rotem Phosphor, in wässriger Phase in Anwesenheit von dispergiertem rotem Phosphor und 0,1 bis 8 Gew.-% Hexamethylentetramin bezogen auf die Masse an eingesetztem rotem Phosphor durch Zusatz einer Menge an Säure, die in der Mischung zur Einstellung eines pH-Wertes von 0 - 5 führt, zur Polymerisation gebracht wird, wobei die Temperatur der Reaktionsmischung bei 25 bis 150°C gehalten wird und ein Gewichtsverhältnis von rotem Phosphor zu wässriger Phase von 1 : 0,3 bis 1 : 3 eingestellt ist.

2. Verfahren nach Anspruch 1, **dadurch gekennzeichnet, dass** ein Gemisch aus 0,5 bis 3,0 Gew.-% Harnstoff, 5 bis 15 Gew.-% Resorcin, 10 bis 100 Gew.-% Formaldehyd sowie 1 bis 6 Gew.-% Hexamethylentetramin bezogen auf den eingesetzten roten Phosphor durch Zusatz einer Menge an Säure, die in der Mischung zur Einstellung eines pH-Wertes von 0 - 5 führt, zur Polymerisation gebracht wird.

3. Verfahren nach einem oder mehreren der vorangegangenen Ansprüche, **dadurch gekennzeichnet, dass** die Reaktion bei Temperaturen von 50 bis 150°C durchgeführt wird.

4. Verfahren nach einem oder mehreren der vorangegangenen Ansprüche, **dadurch gekennzeichnet, dass** durch die Zugabe einer Säure ein pH-Wert in der Reaktionsmischung von 0 bis 3 eingestellt wird.

5. Verfahren nach einem oder mehreren der vorangegangenen Ansprüche, wobei als Säure eine Mineralsäure eingesetzt wird.

6. Verfahren nach einem oder mehreren der vorangegangenen Ansprüche, wobei in der Reaktionsmischung ein Verhältnis von rotem Phosphor : Wasser von 1 : 0,3 bis 1 : 2,5 eingestellt ist.

7. Verfahren nach einem oder mehreren der vorangegangenen Ansprüche, **dadurch gekennzeichnet, dass** die Reaktion bei einem Druck von 0,8 bis 8 bar durchgeführt wird.

8. Mikroverkapselter roter Phosphor gemäß einem oder mehreren der vorangegangenen Ansprüche.

9. Mikroverkapselter roter Phosphor nach Anspruch 8, wobei der Gewichtsanteil der Kapselwand 1 bis 50 Gew.-%, vorzugsweise 5 bis 25 Gew.-% bezogen auf die Summe von Phosphor und Kapselwand beträgt.

10. Verwendung von mikroverkapseltem rotem Phosphor gemäß einem oder mehrerer der vorangegangenen Ansprüche als Flammschutzmittel in Kunststoffen und Kunststoffblends.

11. Formmassen enthaltend mikroverkapselten roten Phosphor gemäß einem oder mehreren der vorangegangenen Ansprüche.

12. Formmassen gemäß einem oder mehreren der vorangegangenen Ansprüchen zusätzlich enthaltend eine oder mehrere anorganische oder organische Metallverbindung, Metallsalz und/oder Metallkomplex.

13. Formmassen gemäß einem oder mehreren der vorangegangenen Ansprüche enthaltend Hilfs- und/oder Verstärkungsstoffe.

14. Formmassen gemäß einem oder mehreren der vorangegangenen Ansprüche enthaltend ein weiteres/weitere Flammschutzmittel.

15. Formkörper, hergestellt aus Formmassen gemäß einem oder mehreren der vorangegangenen Ansprüche.
